# EUROPEAN PATENT APPLICATION

(11) **EP 0 978 800 A2**
(43) Date of publication of application: **09.02.2000**
(21) Application number: 99304857.8
(22) Date of filing: 21.06.1999
(51) Int. Cl.: G06K 19/07

(54) **Portable electronic banking apparatus**

(30) Priority: 19.06.1998 GB 9813155; 14.09.1998 GB 9819935
(71) Applicant: NCR International, Inc., Dayton, Ohio 45479 (US)
(72) Inventor: Emmott, Stephen J, London SE1 9JL (GB); Johnson, Graham I., Tayport, Fife DD6 9AA Scotland (GB); Woods, Sarah, London SW1W 8QR (GB)
(74) Representative: Cleary, Fidelma

(57) **Abstract**

A portable electronic banking apparatus (10) is to be carried about the person, possible resembling a wallet or purse. The apparatus is provided with a biometrics identification device (25) such as a fingerprint recognition device to validate the holder in transactions. The apparatus can communicate with external apparatus such as a Point Of Sale (POS) terminal or a banking terminal such as an Automatic Teller Machine (ATM). The apparatus can thus identify a user and then conduct a transaction to avoid fraudulaent transactions taking place. In a preferred embodiment the apparatus is equipped to carry electronic cash with which to conduct transactions.

## Description

The present invention relates to a portable electronic banking apparatus having particular application to an apparatus which can identify a user or users.

Cashless transactions are increasingly being used in the world of commerce. The reader will be familiar with the ubiquitous plastics card which carries a magnetic stripe for storing user data. Typically, the signature of the authorized user is also carried on the card. The possibility for fraud using such cards is extensive. Usually a card-issuer has to limit the cost to the user when fraudulent use has occurred. This clearly represents a significant expense to card-issuing institutions.

Certain plastics cards have been issued with a photograph of the holder but this is difficult for a cashier or other personnel to verify. The user may be sporting a beard or wearing additional makeup as compared with the time when the photograph was taken. Consequently, persons having a similar appearance to that of the genuine cardholder may well be able to use the card without difficulty.

It is an object of the present invention to ameliorate these risks of fraud.

According to a first aspect of the present invention, there is provided a portable electronic banking apparatus to be carried about the person, the apparatus comprising: means for identifying at least one user from biometrics; communication means for communicating with an external apparatus; and transaction means for conducting a financial transaction via the communication means.

The biometric indicators used may be iris recognition or fingerprint recognition, for example.

Consequently, the valid user or users are identified to the banking apparatus which then conducts a transaction only for that valid user. The transaction may comprise payment for goods using a credit or debit card account, payment of bills using a current account or payment for goods or services using electronic cash stored on the apparatus.

In a preferred embodiment the account details and/or electronic cash are stored on one or more removable tokens. Such tokens includes smart cards, smart tabs, electronically erasable EPROM and i-Buttons.

In a further preferred embodiment two or more such tokens are provided and, still further preferably, the apparatus is equipped with two or more readers for the tokens. This latter feature allows different tokens to be used or activated without having to physically move them around within the apparatus.

The apparatus is preferably in the form of a wallet, billfold or purse.

The invention will now be described, by way of example, with reference to the accompanying drawings in which;
Figure 1 represents a wallet, incorporating the present invention, shown in a closed position,
Figure 2 represents the wallet of Figure 1 shown in an open position,
Figure 3 is a block diagram of an electronic network including a network site constituted by the wallet of Figures 1 and 2,
Figure 4 shows a block circuit diagram of components accommodated within the wallet of Figures 1 and 2,
Figure 5 shows another embodiment of a portable banking apparatus, and
Figure 6 shows yet another embodimenr of a portable banking apparatus.

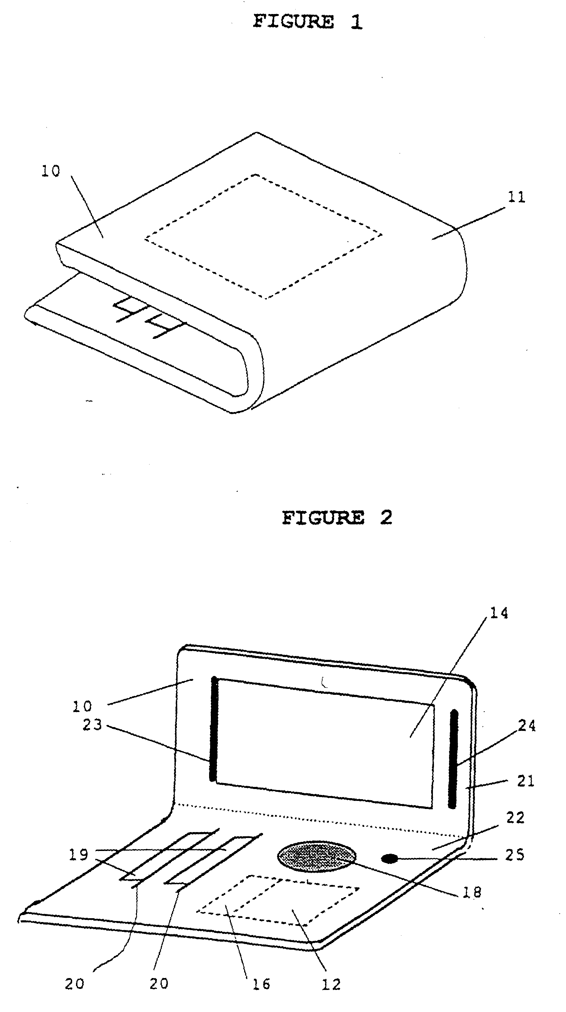

Referring now to Figures 1 and 2, there is shown a wallet 10 comprising a flexible leather or fabric outer casing 11. The casing is folded over as shown in Figure 1 when not in use so that the wallet can be conveniently carried on the person of the user. The wallet 10 is unfolded as shown in Figure 2 to allow physical access to a number of items accommodated within the wallet. Other functional items, as will be explained, are accommodated within the interior depth of the casing and remain out of sight of the user even when the wallet 10 is unfolded.

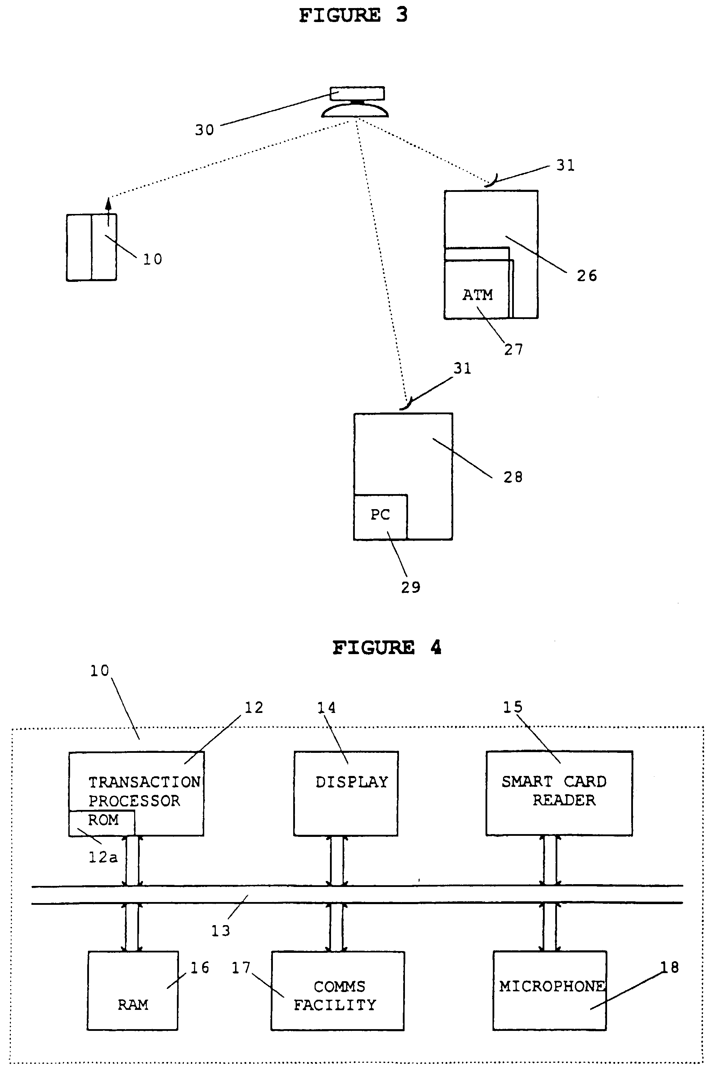

Referring to Figure 4, the wallet 10 is represented diagrammatically by an outer, dotted line rectangle. The wallet accommodates a transaction processor 12, incorporating a read-only memory 12a. The transaction processor is connected to a data bus 13. A liquid crystal touch screen display 14, a smart card reader 15, a random access memory 16, an electronic mobile communications facility 17 and a microphone 18 are also connected to the data bus 13.

As seen in Figure 2, the wallet 10 accommodates a number of smart cards 19 which can be placed by the user within storage pockets 20 in the wallet casing. The pockets 20 may number 2 as shown in Figure 2 or any other convenient number greater than 2.

The liquid crystal display 14 is seen in Figure 2 to be mounted on the inner face of the flap 21 of the wallet to be visible to the user. The microphone 18 is mounted in the flap 22 of the wallet to be accessible to the voice of the user. The processor 12 and the smart card reader 15, the memory 16 and the communications facility 17 are all disposed within the interior depth of the wallet casing. The transaction processor 12 and memory 16 are shown diagrammatically by dotted lines in Figure 2 as disposed interiorly of the flap 22 of the wallet 10. The card reader 15 is disposed behind the display 14 in the flap 21 of the wallet but has a card receiving slot 23 which is positioned alongside the screen 14. The slot 23 is provided in the smart card reader to receive one of the smart cards 19 taken from its storage pocket 20.

The communications facility 17 is also disposed within the flap 21 of the wallet behind the display screen 14. An extensible aerial 24 forming part of the communications facility 17 is however arranged for access by the user. A user recognition device 25 is provided to control the powering on of the components shown in Figure 4.

In Figure 3, the wallet 10 is shown in operation as one site of an electronic communications network. Other sites include a banking building 26 including an automatic teller machine 27 and a building 28 including a personal computer 29. The communications network is shown diagrammatically to include a satellite 30 which provides a link to satellite dishes 31 provided on the buildings 26 and 28. It will be understood by those skilled in the art of electronic communications that the network is capable of transmitting data to be relayed over the public switched networks with additional links to the internet for e-mail communications.

In operation, a user can open the wallet 10 to gain access to the user recognition device 25. The recognition device is a biometrics device which operates by reference to an image of the iris of the authorised user. The authorised image is stored by the transaction processor. When an attempt is made to use the wallet, a comparison is made between the stored image and the iris of the user attempting to use the wallet. If there is a match between the iris of the user and the stored image, the transaction processor 12 is enabled and a message informing the user of this is displayed on the display screen 14. If there is no match, the transaction processor 12 is shut down.

It will be apparent to those skilled in the art that the biometrics recognition device 25 may take a form other than an iris recognition device. One such alternative form is a biometrics recognition device in which recognition is made of the fingerprint of the authorised user.

Upon recognition of the user, the transaction processor 12 is programmed by means of programs stored in the ROM 12a to display to the user a menu of options on the screen 14. The options enable mobile electronic banking and communication, electronic commerce, and computing operations as will be explained.

In a first option, the user may select a banking operation which involves the use of one of the smart cards 19 selected from its storage pocket 20. The user is instructed through the display 14 to insert the smart card 19 into the slot 23 of the smart card reader 15. The smart card reader 15 communicates via the data bus 13 with the transaction processor 12 to signal the insertion of the chosen smart card 19 and to transfer data from the smart card to the RAM 16 under the control of the transaction processor 12. The data in the RAM 16 includes encrypted information which is accessed by the transaction processor 12 and subject to decryption by means of a decryption program stored in the ROM 12a. The decrypted information may include financial information such as the balance of currency stored in the smart card. The financial information is displayed to the user on the screen 14 so that the user may be informed of the balance stored on the smart card.

In the event that the user chooses to increase the balance of currency stored on the smart card 19, the user may opt to select this option from the display on the screen 14. The option is selected by touching the screen at the location where that option is displayed. The selection of the option is communicated via the data bus 13 to the transaction processor 12 which is programmed to send data to activate the mobile communications facility 17. The communications facility 17 is activated to communicate an encrypted message over the network illustrated in Figure 3. The message may be addressed, for example to an ATM 27, to dispense currency of a value selected from the touch screen by the user. The ATM 27 dispenses the requested currency value by sending a return encrypted message to the facility 17 for entry into the RAM 16 under the control of the transaction processor 12. The value of any dispensed currency is deducted by the ATM 27 from the balance of an account held by the user of the wallet 10. The dispensed currency is communicated from the RAM 16 to the smart card reader 15 via the data bus 13 to be entered into the smart card 19.

From the above explanation, it will be seen that the wallet 10 can be used as a digital wallet in which the currency value stored in one or more of the smart cards 19 can be increased because the display device 15 is user operable to communicate financial transaction instructions to the transaction processing means 12, and the data transaction processing means 12 is programmed to respond to the user instructions to effect financial transfers between the smart card reader 15 and the data communications facility 17.

The cash stored electronically in the smart cards 19 can be used to make purchases electronically. In this case, the user may choose an option from the touch screen 14 to make a purchase using the card 19 entered into the card reader 15. The display screen 14 communicates this option to the transaction processor 12 which thereupon instructs the user to enter the data relevant to the purchase. The purchase is communicated electronically by way of the communications facility 17 over the network to the retailer or service provider from whom the purchase is being made. A return message from the retailer or service provider acknowledging the purchase is entered into the RAM 16 and the transaction processor 12 responds to this return message by sending data via the bus 13 to the smart card reader 15 to deduct the purchase amount from the smart card 19 in the reader 15.

It will be apparent that the number of devices that are connected to the data bus 13 may be increased beyond those described and illustrated in the accompanying Figures. For example, the wallet 10 may have more than one smart card reader so as to provide a wider facility to effect financial transactions. Such transactions may include transfers from one smart card reader to another so as to manipulate the transfer of cash from one card to another.

The microphone 18 is provided to widen the communication capability of the wallet 10. The microphone incorporates an analog to digital conversion circuit so as to enable digital information representing speech to pass via the data bus 13 to the transaction processor 12. The transaction processor 12 has a speech recognition program capable of converting the microphone input into a text output for display on the screen 14 and for communication to the communications facility 17. The user may select an option from the screen 14 to compose a message to be sent via the communications facility 17. The message may, for example consist of a paging message or may be an e-mail message. The selection of the message option through the touch screen 15 is communicated to the transaction processor 12 via the data bus 13. In response the transaction processor requests the user via the screen 15 to enter the message through the microphone 18. The transaction processor 12 receives the digital form of the message via the data bus 13 and is programmed to store the message in the RAM 16. The transaction processor converts the digital data in the RAM 16 to text data which is supplied by way of the bus 13 to be displayed on the screen 15. The user is requested to confirm or cancel the displayed message. If the message is confirmed, the transaction processor 12 controls the communication facility 17 to receive the text data from the bus 13 and to transmit the message over the appropriate mobile communications network. The wallet may also have the functionality of a digital cellular mobile telephone.

The messages transmitted from the wallet may be to request information from information servers, which information is to be displayed on the screen 14 or to be downloaded onto a smart card 19. The downloaded information may, for example, be of sporting results, financial share information, music or any other material which can conveniently be transmitted and received for storage in a smart card. Intelligent agent programs may be stored by the transaction processor 12 or accessed by a request message transmitted from the wallet 10 by the user. Such intelligent agent programs may be used to search for material to be transmitted back to the wallet or may be used to filter material which is transmitted back to the wallet.

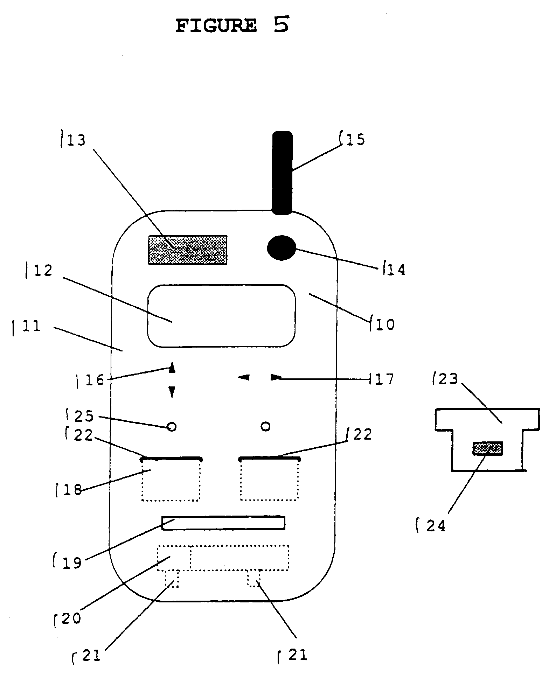

Referring now to Figure 5, there is shown a portable, hand-held communication device 110 comprising an outer casing 111. A liquid crystal display 112 is mounted on a front face ofthe casing 111. Above the display 112, as seen in Figure 5, are arranged a microphone/loudspeaker 113, a user recognition device 114 and an antenna 115. Below the display 112 are arranged vertical cursor control controls 116 and horizontal cursor controls 117 to control a cursor displayed on the display device as will be explained. The device 110 also has a pair of smart card sensors 118, a paging control 119, and a transaction processor 120. Data communication ports 121 allow external data communication to the data processor 120. The transaction processor 120 and the ports 121 are shown diagrammatically in dotted lines in Figure 5 because they are disposed within the interior of the casing 111.

Each of the smart card sensors 118 includes a receiving slot 122 to receive a smart card and hold the smart card in an operating position for data communication with sensor contacts within the smart card sensor. An example of a smart card 123 usable with the sensors 118 is shown alongside the device 110. The smart card is generally T-shaped and carries a semiconductor chip 124 which has contacts for engagement with the smart card sensor contacts in the device 110. An operating switch 125 is mounted above each sensor 118 to be overlaid by the cross-bar of the T-shaped smart card when in use. The switch 125 is operable in response to pressure applied by a user of the device 110 to flex the smart card into engagement with the switch 125. The switch is then operated by the pressure applied through the intermediary of the flexed smart card held by the sensor. The number of smart card sensors 118 is a matter of design choice. Although only two such sensors have been shown, there may be any convenient number other than two.

The cross-bar of the T-shaped smart card 123 is wider than the entry slot 122 of either smart card sensor 118. The cross-bar therefore acts as an abutment to register the smart card 123 precisely in relation to the sensor contacts within the smart card sensor 118 upon entry of the smart card into the slot 122. Whilst a T-shaped smart card is to be preferred, other shapes may be used to provide a suitable abutment to register the smart card in the sensor 118 and to overlay the switch 125. For example the cross-bar of the smart card may be replaced by a tongue of circular or elliptical shape.

The internal interconnections and contribution which the device can make to a network are similar to those for the first embodiment and described with reference to Figures 4 and 3 respectively.

In operation, a user can operate the paging control 119 to gain access to the data communications network. The recognition device 114 is a biometric device which responds to the requested access and operates by reference to an image of the iris of the authorised user. The authorised image is stored by the transaction processor. When an attempt is made to use the device 110, a comparison is made between the stored image and the iris of the user attempting to use the device 110. If there is a match between the iris of the user and the stored image, the transaction processor 120 is enabled and a message informing the user of this is displayed on the display screen 112. If there is no match, the transaction processor 120 is shut down.

It will be apparent to those skilled in the art that the biometric recognition device 114 may take a form other than an iris recognition device. One such alternative form is a biometric recognition device in which recognition is made of the fingerprint of the authorised user.

Upon recognition of the user, the transaction processor 120 is programmed by means of programs stored in the ROM 12a (figure 4) to display to the user a menu of options on the screen 112. The options enable mobile electronic banking and communication, electronic commerce, personal communication, data transfer and computing operations as will be explained.

In a first option, the user may select a banking operation which involves the use of a smart card 123 inserted in one of the smart card readers 118. The smart card reader 118 is switched on by pressure on the smart card 123 which flexes into engagement with the switch 125. The smart card communicates via the data bus 13 (Figure 4) with the transaction processor 120 to signal the selection ofthe chosen smart card 123 and to transfer data from the smart card to the RAM 16 (Figure 4) under the control of the transaction processor 120. The data in the RAM includes encrypted information which is accessed by the transaction processor 120 and subject to decryption by means of a decryption program stored in the ROM 12a. The decrypted information may include financial information such as the balance of currency stored in the smart card. The financial information is displayed to the user on the screen 112 so that the user may be informed of the balance stored on the smart card.

In the event that the user chooses to increase the balance of currency stored on the smart card 123, the user may opt to select this option from the display on the screen 112. The option is selected by moving a screen cursor to the location where that option is displayed under the control of the cursor controls 116 and 117. The selection of the option is communicated via the data bus 13 to the transaction processor 120 which is programmed to send data to activate the mobile communications facility 17 (Figure 4). The communications facility is activated to communicate a message over the network illustrated in Figure 3. The message may be addressed to a bank to dispense currency of a value selected from the screen 112 by the user.

The bank dispenses the requested currency value by sending a return message to the facility for entry into the RAM 16 under the control of the transaction processor 120. The value of any dispensed currency is deducted from the balance of an account held by the user. The dispensed currency is communicated from the RAM to the smart card reader 118 via the data bus 13 to be entered into the smart card 123.

From the above explanation, it will be seen that the device 110 can be used as a digital wallet in which the currency value stored in one or more of the smart cards 123 can be increased because the display device 112 is user operable to communicate financial transaction instructions to the transaction processing means 120, and the data transaction processing means 120 is programmed to respond to the user instructions to effect financial transfers between the smart card reader 118 and the data communications facility 17.

The cash stored electronically in the smart cards 123 can be used to make purchases electronically. In this case, the user may choose an option from the screen 112 to make a purchase using a card 123 entered into a selected card reader 118. The different card readers 118 may hold smart cards which correspond to individual retailers. For example one smart card reader 118 may hold a smart card 123 individual to a food store and another may hold a smart card 123 individual to an automobile fuel station. The choice of smart card reader is made by the user by pressing a smart card to activate the corresponding switch 125. The display screen 112 and cursor controls 116 and 117 enable the user to enter the data relevant to the purchase. The purchase is communicated electronically by way ofthe communications facility 132 over the network to the retailer or service provider from whom the purchase is being made. A return message from the retailer or service provider acknowledging the purchase is entered into the RAM and the transaction processor 120 responds to this return message by sending data via the bus 13 to the smart card reader 118 to deduct the purchase amount from the smart card 123 in the reader 118.

The ROM 12a stores an identity code or call sign which is individual to the device 110 and which distinguishes it from other such devices. In the communications network shown in Figure 3, a retail store has a communications centre which also stores the identity code or call sign for a multiplicity of portable communication devices each as constituted by the device 110 of Figure 5. The communications centre has the capability of transmitting call signs for the multiplicity of devices 110. The call signs are transmitted continually by the retail store to be received over an area in proximity to the store. As a user carrying one ofthe devices 10 nears the retail store, the device 110 picks up the call signs through the antenna 115. The call signs from the retail store include an identifier to indicate that the source of the call signs is the retail store.

The transaction processor 120 is programmed to recognise an incoming signal as a call sign and is also programmed to compare the incoming call sign with the call sign in the ROM 12a. When the incoming call sign matches that stored in the ROM 12a, the transaction processor deciphers the identifier to register that the call signs emanated from the retail store and places an answering message on the bus 13 which is transmitted by the communications facility 17 as an outgoing message to be received by the communications centre. The answering message advises the communications centre that the device 110 is in the vicinity of the retail store. The communications centre responds to the message from the device 110 by sending personalised data to the device 110 preceded by the call sign for the device. The personalised data may include a welcome message, updating information about purchases available at a discount price and credit facilities available to the user. The user is informed through the display 112 that communication has been established with the particular retail store identified by the call sign and that a purchase may be made from the store using the smart card 123 corresponding to that store.

The microphone 113 is provided to widen the communication capability of the device 110. The microphone incorporates an analog to digital conversion circuit so as to enable digital information to pass via the data bus 130 to the transaction processor 120. The transaction processor 120 has a speech recognition program capable of converting the microphone input into a text output for display on the screen 112 and for communication to the communications facility. The user may select an option from the screen 112 to compose a message to be sent via the communications facility. The message may, for example consist of a paging message or may be an e-mail message. The selection of the message option through the screen 112 is communicated to the transaction processor 120 via the data bus 13. In response, the transaction processor requests the user via the screen 112 to enter the message through the microphone 113. The transaction processor 120 receives the digital form of the message via the data bus 130 and is programmed to store the message in the RAM. The transaction processor converts the digital data in the RAM to text data which is supplied by way of the bus 13 to be displayed on the screen 112. The user is requested to confirm or cancel the displayed message. If the message is confirmed, the transaction processor 120 controls the communication facility to receive the text data from the bus 13 and to transmit the message over the appropriate mobile communications network.

In the communications network shown in Figure 3, the home building 28includes a personal computer 29 with a home communications centre. The home communications centre is loaded with the call sign of a user device 110 and is adapted to transmit the call sign continually in an area within the vicinity of the home building. The call sign transmitted from the home communications centre includes an identifier to indicate that the source of the call sign is the home communications centre. Once the user has reached the proximity of the home building, the device 110 matches the call sign transmitted from the home building to the call sign stored in the ROM 12a in the manner already described above. The response of the transaction processor 120 is to recognise that the call sign is form the home communications centre and to formulate an answer message which interrogates the personal computer 136. The personal computer is programmed to respond with a transmission of personal information to the device 110. Such information may include a welcome message, recorded telephone messages and paging information. The personal computer 29 is linked to a public switched network for the purpose of taking and recording messages received while the user is away from the home building 28.

Request messages can also be transmitted from the device 110 to request information from information servers to be displayed on the screen 112 or to be downloaded onto a smart card. The downloaded information may, for example, be of sporting results, financial share information, music or any other material which can conveniently be transmitted and received for storage in a smart card. Intelligent agent programs may be stored by the transaction processor 120 or accessed by a request message transmitted from the device 110 by the user. Such intelligent agent programs may be used to search for material to be transmitted back or may be used to filter material which is transmitted back.

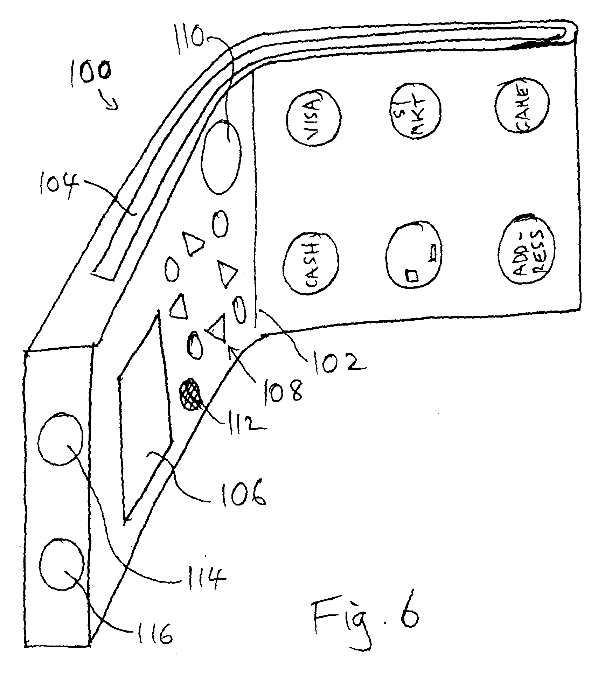

Figure 6 shows a still further alternative embodiment of the apparatus in accordance with the present invention. This is similar, in many respects, to the embodiments shown in Figures 1, 2 and 5. Instead of the smart cards 19 shown in Figure 2 or the smart tabs 123 shown in Figure 5, this embodiment uses a plurality of i-Buttons. These are small devices containing nonvolatile memory available from Dallas Semiconductor and which are similar in appearance to the small disc-shaped batteries used in calculators and electronic watches. The features of operation are similar to those in the earlier-described embodiments. As a further alternative to iButtons are electronically erasble EPROM made by Xircom.

What has been described is a banking device which can conveniently be carried by the user and can be formed in the same manner as the already familiar wallet. Alternatively the device could be shaped to resemble a purse. The device is capable of stylistic versatility to make it an attractive fashion accessory whilst offering the user a comprehensive money management facility which includes the management of electronic financial transactions. It will be apparent that in the form of a wallet or purse, the device may be provided with storage for currency in the form of notes or coins.

## Claims

1. A portable electronic banking apparatus to be carried about the person, the apparatus comprising:
means for identifying at least one user from biometrics;
communication means for communicating with an external apparatus; and
transaction means for conducting a financial transaction via the communication means.

2. A portable electronic banking apparatus as claimed in claim 1, wherein the financial transaction comprises altering the amount of electronic funds stored on the apparatus.

3. A portable electronic banking apparatus as claimed in claim 1 or claim 2, further comprising means for reading from, and writing to, a token.

4. A portable electronic banking apparatus as claimed in claim 3, wherein the token comprises a smart card.

5. A portable electronic banking apparatus as claimed in claim 3, wherein the token comprises a smart tab.

6. A portable electronic banking apparatus as claimed in claim 3, wherein the token comprises an i-Button.

7. A portable electronic banking apparatus as claimed in claim 3, wherein the token is an electronically erasable EPROM.

8. A portable electronic banking apparatus as claimed in any one of the claims 3 to 7, wherein a plurality of tokens are provided.

9. A portable electronic banking apparatus as claimed in claim 8, wherein a plurality of token read/write means are provided.

10. A portable electronic banking apparatus as claimed in any one of the claims 1 to 9, wherein the communication means comprises short-distance communication means.

11. A portable electronic banking apparatus as claimed in claim 10, wherein the communication means comprises one of infra-red communication means, inductive loop communication means or hard wired connection means.

12. A portable electronic banking apparatus as claimed in any one of claims 1 to 11, wherein the apparatus has the appearance of wallet, billfold or purse.

13. A portable electronic banking apparatus as claimed in any one of claims 1 to 12, further comprising a microphone.

14. A portable electronic banking device as claimed in claim 13, further comprising mobile telephone circuitry.
